# EUROPEAN PATENT APPLICATION

(11) **EP 1 924 093 A1**
(43) Date of publication of application: **21.05.2008**
(21) Application number: 07110543.1
(22) Date of filing: 19.06.2007
(51) Int. Cl.: H04N 5/76

(54) **Photographing apparatus having automatic mode setting function and automatic mode setting method thereof**

(30) Priority: 17.11.2006 KR 20060113718
(71) Applicant: Samsung Electronics Co., Ltd., Suwon-si, Gyeonggi-Do (KR)
(72) Inventor: Min, Byung-seog, Gyeonggi-do (KR)
(74) Representative: Grünecker, Kinkeldey, Stockmair & Schwanhäusser Anwaltssozietät

(57) **Abstract**

An automatic mode setting method and a photographing apparatus using the same are disclosed. The automatic mode setting method of the photographing apparatus includes judging the type of recording medium, setting a recording mode corresponding to the type of recording medium, and converting a photographed image into a format adapted to the set recording mode to record onto the recording medium.

## Description

### BACKGROUND OF THE INVENTION

### Field of the Invention

The present invention relates generally to a photographing apparatus having a mode setting function and a mode setting method thereof. More particularly, the present invention relates to a photographing apparatus having an automatic mode setting function and an automatic mode setting method thereof, which automatically sets up a recording mode.

### Description of the Related Art

A photographing apparatus is an apparatus which photographs a subject and records the produced image. Typical examples are digital cameras and digital camcorders. Also, a photographing apparatus can reproduce images recorded after being photographed.

When recording a photographed image, a photographing apparatus converts the image into a single format and then compresses the converted image to record onto the recording medium that is applied to the photographing apparatus.

However, with the development and appearance of new recording media, the types of recording media capable of storing photographed images has diversified If a photographed image is converted and stored in a single format regardless of the type of recording medium that is applied to the photographing apparatus, a problem occurs in that the quality of the stored image could deteriorate. As a result a user's demand to store the image in good quality is not met.

Also, even if a photographing apparatus is capable of recording a photographed image in different modes according to different types of recording media, the user is required to directly discriminate or judge the type of recording medium that is applied to the photographing apparatus and set a recording mode corresponding thereto, and must make a lot of effort and studying in order to use the photographing apparatus in this way.

Accordingly, there is a need for a photographing apparatus having an automatic mode setting function and an automatic mode setting method thereof, which can automatically set up a recording mode according to the type of recording medium that is applied to the photographing apparatus, thereby offering a user convenience, and which can record an image converted into a format adapted to a particular recording medium onto that recording medium, thereby minimizing deterioration of image quality.

### SUMMARY OF THE INVENTION

Exemplary embodiments of the present invention address at least the above described problems and/or disadvantages and provide at least the advantages described below. Accordingly, an aspect of exemplary embodiments of the present invention is to provide a photographing apparatus having an automatic mode setting function and an automatic mode setting method thereof, which can automatically set up a recording mode according to the type of recording medium that is applied to the photographing apparatus, thereby offering a user convenience, and which can record an image converted into a format adapted to a particular recording medium onto that recording medium, thereby minimizing deterioration of image quality.

According to an aspect of the present invention, there is provided an automatic mode setting method of an photographing apparatus, including judging the type of recording medium that is applied to the photographing apparatus, setting a recording mode corresponding to the type of recording medium that is applied to the photographing apparatus, and converting a photographed image into a format adapted to the set recording mode to record onto the recording medium.

Preferably, the judging includes judging the type of recording medium that is applied to the photographing apparatus by using information stored in the recording medium.

Preferably, the method further includes deciding whether a mode of the photographing apparatus is a recording mode, and the judging is carried out at the time the mode of the photographing apparatus is decided as the recording mode.

Preferably, the method further includes determining whether the recording medium that is applied to the photographing apparatus is a recordable medium, and the judging is carried out at the time the recording medium is determined as a recordable medium.

Preferably, the recording medium includes at least one of a blue-ray disc (BD), an advanced video codec high definition (AVCHD) disc, and a digital versatile disc (DVD), and the format includes at least one of a format for BD, a format for AVCHD, and a format for DVD.

Preferably, the judging includes judging which of a first recording medium and a second recording medium the recording medium that is applied to the photographing apparatus is. Preferably, the setting includes setting up the recording mode by a first recording mode when the recording medium is judged as the first recording medium and by a second recording mode when the recording medium is judged as the second recording medium. Preferably, the converting includes converting the photographed image into a first format to record onto the recording medium when the recording mode is set as the first recording mode, and converting the photographed image into a second format to record onto the recording medium when the recording mode is set as the second recording mode.

According to another aspect of the present invention, there is provided a photographing apparatus, including a signal processing unit to convert a photographed image into a predecided format, and a control unit to judge the type of recording medium that is applied to the photographing apparatus, to set a recording mode by a recording mode corresponding to the type of recording medium that is applied to the photographing apparatus, and to control the signal processing unit, so that the photographed image is converted into a format adapted to the set recording mode.

Preferably, the control unit judges the type of recording medium that is applied to the photographing apparatus by using information stored in the recording medium.

Preferably, the control unit decides whether a mode of the photographing apparatus is a recording mode, and judges the type of recording medium that is applied to the photographing apparatus at the time the mode of the photographing apparatus is decided as the recording mode.

Preferably, the control unit determines whether the recording medium that is applied to the photographing apparatus is a recordable medium, and judges the type of recording medium that is applied to the photographing apparatus at the time the recording medium is determined as the recordable medium.

Preferably, the recording medium includes at least one of a blue-ray disc (BD), an advanced video codec high definition (AVCHD) disc, and a digital versatile disc (DVD), and the format includes at least one of a format for BD, a format for AVCHD, and a format for DVD.

Preferably, the control unit judges which of a first recording medium and a second recording medium the type of recording medium that is applied to the photographing apparatus is, sets the recording mode by a first recording mode and then controls the signal processing unit, so that the photographed image is converted into a first format, when the recording medium that is applied to the photographing apparatus is judged as the first recording medium, and sets the recording mode by a second recording mode and then controls the signal processing unit, so that the photographed image is converted into a second format, when the recording medium that is applied to the photographing apparatus is judged as the second recording medium.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects and features of certain exemplary embodiments of the present invention will be more apparent from the following detailed description, taken in conjunction with the attached drawing figures, wherein;

FIG. 1 is a block diagram exemplifying a multimedia data recording and reproducing apparatus according to an exemplary embodiment of the present invention; and

FIG. 2 is a flowchart illustrating a method of automatically setting a recording mode according to the type of recording medium that is applied to the photographing apparatus in accordance with an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

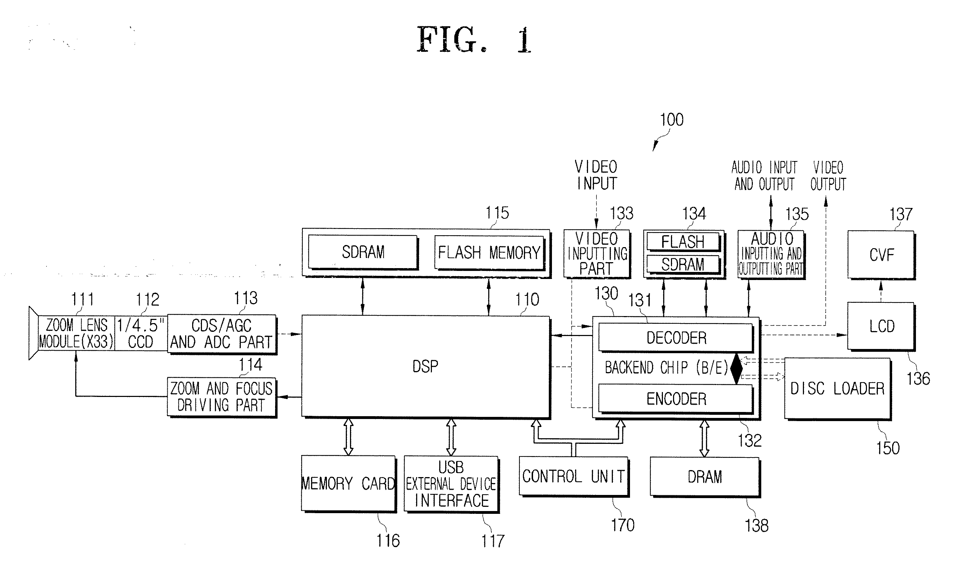

FIG. 1 is a block diagram exemplifying a construction of a multimedia data recording and reproducing apparatus, which is an example of the photographing apparatus in accordance with an exemplary embodiment of the present invention.

The multimedia data recording and reproducing apparatus 100 in accordance with the exemplary embodiment of the present invention includes a data processing unit 110~117, an encoding and decoding unit 130~138 to encode and decode image information and audio data, a disc loader 150, and a control unit 170 to control the entire operation of the apparatus.

The data processing unit converts the image information into digital signals, processes the digital-converted image information in the form of data to be recorded onto a semiconductor recording medium, and controls to output the processed data to an external device. The data processing unit includes a digital signal processing part (DSP) 110, a zoom lens module 111, a charge-coupled device (CCD) module 112, a corrected double sampling (CDS)/auto gain control (ACTC) and analog to digital converter (ADC) part 113, a zoom and focus driving part 114, a first storing part 115, a memory card 116, and an external device interface 117.

The DSP 110 communicates with the control unit 170 by a serial data transmission method. In a camera mode, the DSP 110 register-controls the CDS/AGC and ADC part 113 and controls to luminance/chroma (Y/C)-convert an image. Also, the DSP 110 preferably carries out a white balance function, a program A/E function, an auto-focus function, and other signal processing functions known in the art, and controls the zoom and focus driving part 114 to carry out a digital zoom function.

Particularly, the DSP 110 converts supplied image information into various formats. To be more specific, under control of the control unit 170, the DSP 110 converts inputted image information into various formats according to the type of recording medium that is applied to the photographing apparatus and outputs it to a backend chip 130.

In addition, the DSP 110 carries out an operation which stores data in the memory card 116. The memory card 116 is preferably a smart media card (SMC), a multimedia card (MMC), a memory stick (MS) card, or any other data storage card. Also, the DSP 110 controls the external device interface 117 to connect with external devices, such as a computer, a digital versatile disc (DVD) player, a video recorder, a digital camera, MS/MM cards, a monitor, or any other device which sends and/or receives data, through an interface, such as a universal serial bus (USB) 2.0 protocol or any other data interface.

The encoding and decoding unit, which encodes and decodes the image information and the audio data, includes a backend chip 130 forming a decoder 131 and an encoder 132, a video inputting part 133, a second storing part 134, an audio inputting and outputting part 135, a liquid crystal display (LCD) 136, a CVF 137, and a dynamic random access memory (DRAM) 138. The audio inputting and outputting part 135 and the LCD 136 can be classified as an outputting unit.

When recording data, the encoder 132 of the backend chip 130 compresses the digital-converted audio information received from the data processing unit, or the video data of a predecided format, for example, an ITU-R 656 format, received from the video inputting part 133 with a MPEG2, and transmits the compressed information or data to the disc loader 150 through an advanced technology attachment packet interface (ATAPI) communication.

When reproducing data, the decoder 133 receives MPEG2 data from a disc loaded or inserted in the disc loader 150, and outputs video data in a predecided format, for example, an ITU-R 656 format to the data processing unit or the LCD 136 including a LCD driver. The video data may be outputted to the outside through a multi-jack (not illustrated). As the disc as described above, a blue-ray disc (BD), an advanced video codec high definition (AVCHD) disc, a digital versatile disc (DVD), or any other data storage disc may be used.

The backend chip 130 including the decoder 131 and the encoder 132 transmits audio clocks and data to the audio inputting and outputting part 135, and controls audio signals through serial data. In a variant reading (VR) mode of a DVD-RW disc, the decoder 131 and the encoder 132 can record, reproduce and edit a VR disc. Also, the backend chip 130 interfaces the loader 150, which can record and reproduce the VR disc, in the ATAPI method, so that regardless of the type of loader, it allows any loaders, which support the recording and reproducing of the VR disc, to be employed.

In addition, the backend chip 130 enables multimedia data to scan, search, zoom, and skip and enables the reproducing to pause during the reproducing of multimedia data, and enables recorded VR data to edit. Also, the backend chip 130 controls to record inputted audio and video signals onto a DVD/R/RW, and decodes to reproduce data recorded on the disc. The decoder 131 and the encoder 132 can finalize contents recorded on the DVD/R/RW to be compatible with other reproducing devices.

The control unit 170 controls respective blocks and circuits of the multimedia data recording and reproducing apparatus 100. Namely, the control unit 170 can transmit and receive data to and from the respective blocks and circuits, and controls the disc loader 150 and carries out a battery control, a LCD control, a CVF control, a light emitting diode (LED) control, and other desired controls.

Particularly, when a user inserts the semiconductor recording medium, that is, a disc into the disc loader 150, the control unit 170 decides whether a present mode of the multimedia data recording and reproducing apparatus 100 is a recording mode or a reproducing mode. If the mode is decided as the recording mode, the control unit 170 determines whether the inserted disc is a recordable medium, on the basis of information stored on the inserted disc. If the inserted disc is determined as the recordable medium, the control unit 170 judges the type of the inserted disc, and sets the present mode of the multimedia data recording and reproducing apparatus 100 by a recording mode corresponding to the judged type of the inserted disc. The control unit 170 controls the DSP 110 to convert a photographed image in a format adapted to the recording mode.

However, even though the present mode of the multimedia data recording and reproducing apparatus 100 is set as the recording mode corresponding to the judged type of the inserted disc, if the user inputs a command of designating a recording mode different from the recording mode set as described above as the present mode through a manipulating part (not illustrated), the control unit 170 can control the DSP 110, so that the photographed image is converted and recorded according the inputted command.

Image and audio data are recorded as follows by the multimedia data recording and reproducing apparatus 100 in accordance with the exemplary embodiment of the present invention. Image data received from the data processing unit is processed by the DSP 110, encoded by the encoder 132, and stored in the memory card 116 or a disc inserted in the disc loader 150. Namely, an image inputted through the zoom lens 111 is converted from an optical signal to an electrical signal by the CCD module 112. Then, the CDS/AGC and ADC part 113 samples the electrical signal to adjust a gain thereof, and converts it into a digital signal.

The DSP 110 processes the converted digital signal into an image data of a certain type, for example, MPEG4, JPEG or the like. Audio data is received from the audio inputting and outputting part 135, encoded by the encoder 132, and recorded in the memory card 116 or the disc according to a memory camera mode or a camera mode. In the memory camera mode, the processed image data is recorded in the memory card 116. In the camera mode, the compressed and converted data is compressed with an MPEG2, and recorded on an 8cm disc inserted in the disc loader 150.

image and audio data are reproduced as follows by the multimedia data recording and reproducing apparatus 100 in accordance with the exemplary embodiment of the present invention. In a camera reproducing mode, multimedia data is read from the disc loader 150 in which a disc is inserted, and is decoded by and then outputted from the decoder 131. In a memory reproducing mode, multimedia data read from the memory card 116 is decoded by and then outputted from the decoder 131.

The multimedia data recording and reproducing apparatus 100 in accordance with the exemplary embodiment of the present invention further includes a user interface unit, which is not illustrated in FIG. 1. The user interface unit is provided with recording device-selecting means for selecting a semiconductor recording device, that is, the disc loader 170 or an optical recording device, that is, the memory card 116, and photographing and reproducing-selecting means for selecting a photographing mode or a reproducing mode.

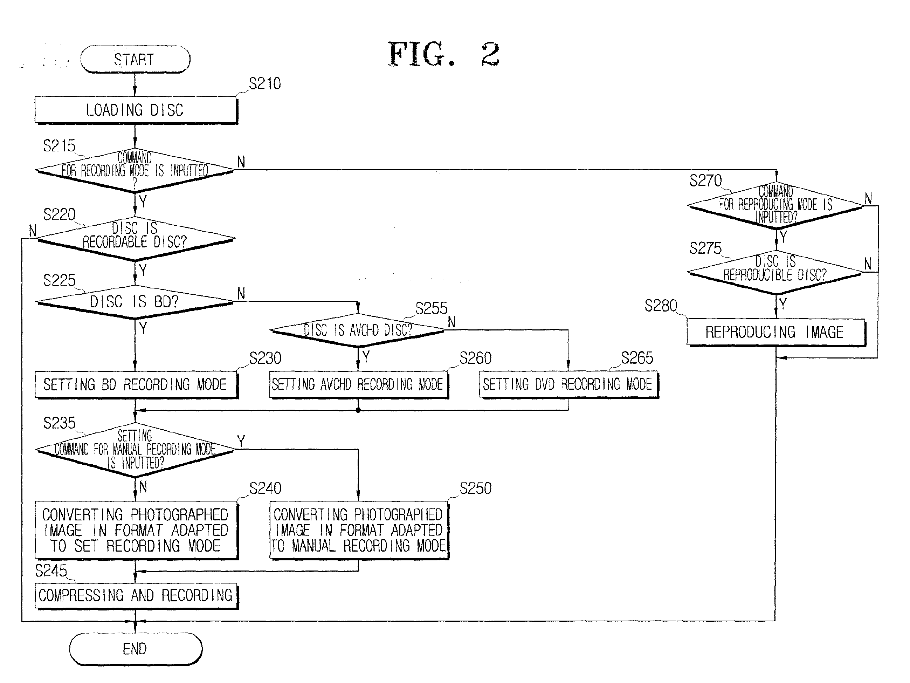

Hereinafter, a mode setting method of the multimedia data recording and reproducing apparatus 100 illustrated in FIG. 1 will be described in detail with reference to FIG. 2. FIG 2 is a flowchart exemplifying the method of automatically setting up a recording mode according to the type of recording medium that is applied to the photographing apparatus in accordance with an exemplary embodiment of the present invention.

Referring to FIG. 2, first, the user loads a disc, which is a type of recording medium, into the disc loader 150 (S210). There are various types of discs, for example, a BD, AVCHD disc, a DVD, and other data storage discs.

When the disc is loaded, the control unit 170 decides whether a command for recording mode among modes of the multimedia data recording and reproducing apparatus 100 is inputted (S215). To be more specific, if the user inputs a command of designating the recording mode as a present mode of the multimedia data recording and reproducing apparatus 100 through the manipulating part, the control unit 170 decides that the command for the recording mode is inputted.

If it is decided that the command for recording mode is inputted (S215-Y), the control unit 170 determines whether the loaded disc is a recordable disc (S220). At this time, the control unit 170 determines whether the disc is a recordable disc on the basis of information stored in the disc. For instance, if images are stored in all of the recordable spaces of the disc, or the user has set up a restriction to the recording of the disc in advance, the control unit 170 determines that the disc is not a recordable disc.

If it is determined that the loaded disc is a recordable disc (S220-Y), the control unit 170 judges whether the loaded disc is a BD (S225). At this time, the control unit 170 judges the type of the disc on the basis of information stored in the disc.

If it is judged that the loaded disc is the BD (S225-Y), the control unit 170 sets the recording mode corresponding to the BD (S230). As a result, the recording mode of the multimedia data recording and reproducing apparatus 100 is set as the recording mode adapted to the type of the loaded disc.

The control unit 170 decides whether a setting command for manual recording mode is inputted (S235). To be more specific, if the user wants to select any one among various recording modes according to her or his taste and to record a photographed image through the selected recording mode, she or he can select a certain recording mode through the manipulating part. Here, the recording mode set up by user's manipulation is called the manual recording mode.

If it is decided that the setting command for manual recording mode is not inputted (S235-N), the control unit 170 controls the DSP 110 to convert the photographed image in a format adapted to the automatically set recording mode (S240).

Particularly, when converting the supplied image, the DSP 110 converts the image in a format for BD, which is a format adapted to the BD.

The control unit 170 controls, so that the converted image is compressed and recorded on the disc (S245). To be more specific, the control unit 170 controls the encoder 132 and the disc loader 150, so that the image converted in the format for BD is compressed by the encoder 132 and the compressed image is recorded on the BD loaded in the disc loader 150.

At step S235, if it is decided that the setting command for manual recording mode is inputted (5235-Y), the control unit 170 controls the DSP 110, so that the photographed image is converted in a format adapted to the manual recording mode inputted by the user through the manipulating part (S250). Then, the signal-processed image is compressed and recorded on the disc (S245).

At step S225, if it is judged that the loaded disc is not the BD (S225-N), the control unit 170 judges that the loaded disc is an AVCHD disc (S255). As a result of the judgment, if it is judged that the loaded disc is the AVCHD disc (S255-Y), the control unit 170 sets up the recording mode to be an AVCHD recording mode, which is a recording mode corresponding to the AVCHD disc (S260). Also, if it is decided that a separate setting command for manual recording mode is not inputted by the user (S235-N), the photographed image is converted in an AVCHD format, which is a format adapted to the set recording mode, and the converted imaged is compressed and stored (S240 and S245).

However, if it is judged that the loaded disc is neither a BD nor an AVCHD disc (S255-Y), the control unit 170 sets up the recording mode to be a DVD recording mode, which is a recording mode corresponding to a DVD (S265), and controls various function blocks of the multimedia data recording and reproducing apparatus 100, so that the photographed image is converted and recorded in a DVD format, as far as the setting command for manual recording mode is not inputted.

As described above, the mode setting method in accordance with the exemplary embodiment of the present invention automatically sets up the different recording mode according to the type of recording medium that is applied to the photographing apparatus, that is, the disc, thereby addressing a problem that whenever the user loads the disc into the multimedia data recording and reproducing apparatus 100, she or he must judge the type of the loaded disc and set up the recording mode corresponding thereto. Also, the mode setting method in accordance with the exemplary embodiment of the present invention is advantageous in that since the recording mode is set as the different recording mode according to the type of the loaded disc and thereby the photographed image is converted in the format adapted to the loaded disc, the recorded image can be saved in an optimum quality.

On the other hand, at the step S215, if it is decided that the command for recording mode is not inputted (S215-N), the control unit 170 decides whether a command for reproducing mode is inputted (S270). If it is decided that the command for reproducing mode is inputted (S270-Y), the control unit 170 determines whether the loaded disc is a reproducible disc (S275). As a result of the determination, if it is determined that the loaded disc is the reproducible disc (S275-Y), the control unit 170 controls various function blocks of the multimedia data recording and reproducing apparatus 100 to reproduce an image recorded on the loaded disc (S280).

In the exemplary embodiment of the present invention, although the mode setting method has been explained that when the disc, that is, the recording medium is loaded or inserted into the disc loader 150, the control unit 170 decides whether the command for recording mode is inputted, and then determines whether the inserted disc is the recordable disc, the present invention is not limited thereto. Namely, since the order of the mode decision and the recordable disc determination by the control unit 170 is exemplified for explanatory convenience, it may be changed.

Further, although the mode setting method in accordance with the exemplary embodiment of the present invention has been explained that when the type of the disc is judged, it is judged in the order of the BD, the AVCHD card and the DVD, the present invention is not limited thereto and the order of the disc judgment may be changed. Also, in the mode setting method in accordance with the exemplary embodiment illustrated in FIG. 2, although the type of the disc has been explained as only the three types, the present invention is not limited thereto. Namely, the mode setting method in accordance with the exemplary embodiment of the present invention is applicable to when other recording media besides the BD, the AVCHD card and the DVD is used, as well as when the type of the disc is more than two types.

As apparent from the foregoing description, according to the exemplary embodiments of the present invention, the photographing apparatus having the automatic mode setting function and the automatic mode setting method thereof automatically sets up the recording mode according to the type of recording medium that is applied to the photographing apparatus, so that there is no need for the user to individually operate the modes, thereby offering the user convenience. Also, the photographing apparatus having the automatic mode setting function and the automatic mode setting method thereof according to the exemplary embodiments of the present invention records the image converted into the different format according to the type of recording medium that is applied to the photographing apparatus onto the recording medium, thereby minimizing deterioration of image quality.

The present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While certain exemplary embodiments of the invention have been shown and described with reference to certain preferred embodiments thereof, it will be understood by those skilled in the art that various changes in form and details may be made therein without departing from the spirit and scope of the invention as defined by the appended claims and their equivalents.

## Claims

1. An automatic mode setting method of a photographing apparatus, comprising:
judging the type of recording medium that is applied to the photographing apparatus;
setting a recording mode corresponding to the type of recording medium that is applied to the photographing apparatus; and
converting a photographed image into a format adapted to the set recording mode to record onto the recording medium.

2. The method of claim 1, wherein the judging comprises judging the type of recording medium that is applied to the photographing apparatus by using information stored in the recording medium.

3. The method of claim 1, further comprising:
deciding whether a mode of the photographing apparatus is a recording mode,
wherein the judging is carried out at the time the mode of the photographing apparatus is decided as the recording mode.

4. The method of claim 1, further comprising:
determining whether the recording medium that is applied to the photographing apparatus is a recordable medium,
wherein the judging is carried out at the time the recording medium is determined as the recordable medium.

5. The method of claim 1, wherein the recording medium comprises at least one of a blue-ray disc (BD), an advanced video codec high definition (AVCHD) disc, and a digital versatile disc (DVD), and the format comprises at least one of a format for BD, a format for AVCHD, and a format for DVD.

6. The method of claim 1, wherein the judging comprises judging which of a first recoding medium and a second recording medium the type of recording medium that is applied to the photographing apparatus is,
wherein the setting comprises setting the recording mode by a first recording mode when the recording medium is judged as the first recording medium and by a second recording mode when the recording medium is judged as the second recording medium,
wherein the converting comprises converting the photographed image into a first format to record onto the recording medium when the recording mode is set as the first recording mode and converting the photographed image into a second format to record onto the recording medium when the recording mode is set as the second recording mode.

7. A photographing apparatus, comprising:
a signal processing unit to convert a photographed image into a predecided format; and
a control unit to judge the type of recording medium that is applied to the photographing apparatus, to set a recording mode corresponding to the type of recording medium that is applied to the photographing apparatus, and to control the signal processing unit, so that the photographed image is converted into a format adapted to the set recording mode.

8. The apparatus of claim 7, wherein the control unit judges the type of recording medium that is applied to the photographing apparatus by using information stored in the recording medium.

9. The apparatus of claim 7, wherein the control unit decides whether a mode of the photographing apparatus is a recording mode, and judges the type of recording medium that is applied to the photographing apparatus at the time the mode of the photographing apparatus is decided as the recording mode.

10. The apparatus of claim 7, wherein the control unit determines whether the recording medium is a recordable medium, and judges the type of recording medium that is applied to the photographing apparatus at the time the recording medium is determined as the recordable medium.

11. The apparatus of claim 7, wherein the recording medium comprises at least one of a blue-ray disc (BD), an advanced video codec high definition (AVCHD) disc, and a digital versatile disc (DVD), and the format comprises at least one of a format for BD, a format for AVCHD, and a format for DVD.

12. The apparatus of claim 7, wherein the control unit:
judges which of a first recording medium and a second recording medium the recording medium that is applied to the photographing apparatus is,
when the recording medium is judged as the first recording medium, sets the recording mode by a first recording mode and then controls the signal processing unit, so that the photographed image is converted into a first format, and
when the recording medium is judged as the second recording medium, sets the recording mode by a second recording mode and then controls the signal processing unit, so that the photographed image is converted into a second format.

13. A computer readable medium of instructions for controlling the control unit of a photographing apparatus, comprising:
a first set of instructions for controlling the control unit to judge the type of recording medium that is applied to the photographing apparatus;
a second set of instructions for controlling the control unit to set a recording mode by a recording mode corresponding to the type of recording medium that is applied to the photographing apparatus; and
a third set of instructions for controlling the control unit to convert a photographed image into a format adapted to the set recording mode to record onto the recording medium.

14. The computer readable medium of instructions of claim 13, wherein the first set of instructions comprises instructions for controlling the control unit to judge the type of recording medium that is applied to the photographing apparatus by using information stored in the recording medium.

15. The computer readable medium of instructions of claim 13, further comprising:
a fourth set of instructions for controlling the control unit to decide whether a mode of the photographing apparatus is a recording mode,
wherein the first set of instructions is carried out at the time the mode of the photographing apparatus is decided as the recording mode.

16. The computer readable medium of instructions of claim 13, further comprising:
a fourth set of instructions for controlling the control unit to determine whether the recording medium that is applied to the photographing apparatus is a recordable medium,
wherein the first set of instructions is carried out at the time the recording medium is determined as the recordable medium.

17. The computer readable medium of instructions of claim 13, wherein the recording medium comprises at least one of a blue-ray disc (BD), an advanced video codec high definition (AVCHD) disc, and a digital versatile disc (DVD), and the format comprises at least one of a format for BD, a format for AVCHD, and a format for DVD.

18. The computer readable medium of instructions of claim 13, wherein the first set of instructions comprises instructions for controlling the control unit to judge which of a first recoding medium and a second recording medium the type of recording medium that is applied to the photographing apparatus is,
wherein the second set of instructions comprises instructions for controlling the control unit to set the recording mode by a first recording mode when the recording medium is judged as the first recording medium and by a second recording mode when the recording medium is judged as the second recording medium,
wherein the third set of instructions comprises instructions for controlling the control unit to convert the photographed image into a first format to record onto the recording medium when the recording mode is set as the first recording mode and to convert the photographed image into a second format to record onto the recording medium when the recording mode is set as the second recording mode.
